# EUROPEAN PATENT APPLICATION

(11) **EP 4 670 837 A1**
(43) Date of publication of application: **31.12.2025**
(21) Application number: 24760565.2
(22) Date of filing: 21.02.2024
(51) Int. Cl.: B01J 19/18, B01J 19/00, H01M 4/525, H01M 4/02

(54) **APPARATUS AND METHOD OF PREPARING PRECURSOR OF CATHODE ACTIVE MATERIAL FOR LITHIUM SECONDARY BATTERY**

(30) Priority: 21.02.2023 KR 20230023163
(71) Applicant: Posco Future M Co., Ltd., Pohang-si, Gyeongsangbuk-do 37918 (KR)
(72) Inventor: KIM, Jaehan, Gumi-si, Gyeongsangbuk-do 39171 (KR); CHOI, Seung Un, Gumi-si, Gyeongsangbuk-do 39171 (KR); NAM, Gyeong Won, Gumi-si, Gyeongsangbuk-do 39171 (KR); JUNG, Kwang Eun, Gumi-si, Gyeongsangbuk-do 39171 (KR); JEUNG, Do Gak, Gumi-si, Gyeongsangbuk-do 39171 (KR)
(74) Representative: Meissner Bolte Partnerschaft mbB
(86) International application number: PCT/KR2024/002254
(87) International publication number: WO 2024/177376

(57) **Abstract**

The present invention relates to an apparatus and method for manufacturing a positive electrode active material precursor for a lithium secondary battery. The apparatus for manufacturing a positive electrode active material precursor for a lithium secondary battery comprises: a reactor into which reaction raw materials are introduced to produce a reaction product; an agitator for agitating the reaction raw materials; a solid-liquid separation member disposed between a sidewall of the reactor and the agitator to perform solid-liquid separation of the reaction product; and a filtrate outlet disposed above the solid-liquid separation member to separate and discharge the filtrate to the outside of the reactor.

## Description

### [Technical Field]

The present embodiments relate to lithium secondary batteries, and more particularly, to an apparatus and method for manufacturing a positive electrode active material precursor for a lithium secondary battery.

### [Background Art]

With growing social concern over the depletion of fossil fuels and the environmental pollution caused by their use, eco-friendly energy sources have attracted increasing attention as a solution. Among such eco-friendly energy sources, interest in electric energy has been rising, and in particular, lithium secondary batteries have garnered significant attention.

The application range of lithium secondary batteries has expanded from small electronic devices and portable IT devices to electric vehicles and energy storage systems. As the application range of lithium secondary batteries expands, the development of new materials for high capacity and high output has become increasingly important. Among the components of lithium secondary batteries, the positive electrode active material is manufactured from a cathode material that is produced via a precursor synthesized from various metal oxides containing elements such as nickel, cobalt, and manganese.

Various methods have been proposed for manufacturing positive electrode active materials; among them, co-precipitation using multicomponent metal salts such as nickel, cobalt, manganese, aluminum, or zirconium as starting materials is utilized as the most economical and practical method. In addition, there are batch-type apparatuses that employ the co-precipitation method to produce the precursor. In such batch-type apparatuses, in order to control the growth and morphology of particles, it typically takes about 20 hours for one residence time (1 RT), which is the time required to fill the reaction volume with input sources, and only about 10% of the reaction mass can be obtained as a precursor based on 1 RT.

As such, in conventional batch-type apparatuses, only about 70% to 80% of the internal volume of the reactor is utilized as the reaction volume, and only about 10% of the reactants are produced as the precursor, resulting in relatively low productivity per batch. Furthermore, in typical batch-type apparatuses, the reaction volume continuously changes during the reaction, which increases the influence of variations in internal flow phenomena of the reactor on the synthesized precursor. In addition, there are problems such as relatively low productivity due to batch-based production, reproducibility issues caused by batch-to-batch variation, and increased management costs, leading to economic inefficiency.

### [Detailed Description of the Invention]

### [Technical Problem]

The technical problem to be solved by the present invention is to provide a manufacturing apparatus for a positive electrode active material precursor for a lithium secondary battery, which can increase the productivity of the precursor, minimize the influence of variations in the precursor synthesized due to changes in internal flow phenomena of the reactor, increase the relative productivity in batch-based production, resolve reproducibility issues caused by batch-to-batch variation, and achieve economic efficiency.

Another technical problem to be solved by the present invention is to provide a manufacturing method for a positive electrode active material precursor for a lithium secondary battery having the aforementioned advantages.

### [Technical Solution]

According to one embodiment of the present invention, a manufacturing apparatus for a positive electrode active material precursor for a lithium secondary battery may comprise: a reactor into which reaction raw materials are introduced to produce a reaction product; an agitator for agitating the reaction raw materials; a solid-liquid separation member disposed between a sidewall of the reactor and the agitator to perform solid-liquid separation of the reaction product; and a filtrate outlet disposed above the solid-liquid separation member to separate and discharge the filtrate to the outside of the reactor. In one embodiment, the solid-liquid separation member may comprise a lower portion, a middle portion, and an upper portion, and a cross-sectional area of the lower portion may gradually decrease from top to bottom.

In one embodiment, the solid-liquid separation member may comprise a plurality of members. In one embodiment, the plurality of solid-liquid separation members may be disposed to face each other. In one embodiment, the apparatus may further comprise a filtrate discharge assisting member for guiding the filtrate provided from the plurality of solid-liquid separation members to move toward the filtrate outlet.

In one embodiment, the reactor may comprise a plurality of reactors connected in parallel. In one embodiment, the filtrate outlet may be disposed so as to be inclined downward as it extends away from the reactor.

In one embodiment, the manufacturing apparatus for a positive electrode active material precursor for a lithium secondary battery may comprise a plurality of reactors including a first reactor and a second reactor, wherein the first reactor includes a first agitator for agitating reaction raw materials introduced therein and an outlet for discharging a portion of a reaction product of the reaction raw materials, and the second reactor includes a second agitator for agitating a reaction product introduced from the first reactor, a solid-liquid separation member disposed between a sidewall of the first reactor and the second agitator to perform solid-liquid separation of the reaction product, and a filtrate outlet disposed above the solid-liquid separation member to separate and discharge the filtrate to the outside of the reactor, and wherein the second reactor is disposed on a side of the first reactor and at a lower position than the first reactor.

In one embodiment, the apparatus may further comprise a recovery member connected from the second reactor toward the first reactor to recover a portion of the filtrate. In one embodiment, the second reactor may comprise a plurality of reactors connected in parallel. In one embodiment, the solid-liquid separation member may comprise a lower portion, a middle portion, and an upper portion, and a cross-sectional area of the lower portion may gradually decrease from top to bottom.

In one embodiment, the solid-liquid separation member may comprise a plurality of members. In one embodiment, the apparatus may further comprise a filtrate discharge assisting member for guiding the filtrate provided from the plurality of solid-liquid separation members to move toward the filtrate outlet. In one embodiment, the solid-liquid separation member may comprise a start volume region and a reaction volume region, and the reaction volume region may be 70% to 90% of an internal volume of the reactor. In one embodiment, an internal volume of the solid-liquid separation member may be 20% or less of the total reaction volume region.

According to another embodiment of the present invention, a method for manufacturing a positive electrode active material precursor for a lithium secondary battery may comprise: introducing reaction raw materials comprising a mixed metal salt solution and an alkaline solution into a reactor and agitating the same with an agitator to produce a reaction product comprising precursor particles; performing solid-liquid separation of the reaction product by disposing a solid-liquid separation member between the reactor and the agitator during production of the reaction product; and discharging remaining filtrate during the solid-liquid separation step. In one embodiment, in the step of performing solid-liquid separation of the reaction product, the solid-liquid separation may be performed by a plurality of solid-liquid separation members.

In one embodiment, prior to the step of performing solid-liquid separation of the reaction product by disposing a solid-liquid separation member between the reactor and the agitator during production of the reaction product, the method may further comprise producing a reaction product of the reaction raw materials in an additional reactor. In one embodiment, the step of performing solid-liquid separation of the reaction product by disposing a solid-liquid separation member between the reactor and the agitator during production of the reaction product may further comprise performing the step in parallel in a plurality of reactors.

### [Advantageous Effects of the Invention]

According to one embodiment of the present invention, by including a pipe-shaped structure having a solid-liquid separation function within the reactor, it is possible to increase the productivity of the precursor through solid-liquid separation and filtrate discharge during the reaction, minimize the influence on the synthesized precursor caused by changes in the internal flow phenomena of the reactor, increase the relative productivity in batch-based production, resolve reproducibility issues caused by batch-to-batch variation, and provide a manufacturing apparatus for a positive electrode active material precursor for a lithium secondary battery having economic efficiency.

According to another embodiment of the present invention, there is provided a method for manufacturing a positive electrode active material precursor for a lithium secondary battery that has the above-mentioned advantages.

### [Brief Description of the Drawings]

FIG. 1 is a view illustrating a manufacturing apparatus for a positive electrode active material precursor for a lithium secondary battery according to one embodiment of the present invention.
FIGS. 2a to 2c are cross-sectional views taken along lines AA', BB', and CC' of FIG. 1, respectively.
FIG. 3 is a view illustrating a manufacturing apparatus for a positive electrode active material precursor for a lithium secondary battery according to another embodiment of the present invention.
FIG. 4 is a view illustrating a manufacturing apparatus for a positive electrode active material precursor for a lithium secondary battery according to another embodiment of the present invention.
FIG. 5 is a view illustrating a manufacturing apparatus for a positive electrode active material precursor for a lithium secondary battery according to another embodiment of the present invention.
FIGS. 6a to 6c are cross-sectional views of positive electrode materials produced using precursors manufactured according to the embodiments and comparative examples of the present invention.
FIGS. 7a and 7b are photographs showing the precursor synthesis results according to the embodiments and comparative examples of the present invention.

### [Mode for Carrying Out the Invention]

The terms "first," "second," "third," and the like, as used herein, are employed to describe various portions, components, regions, layers, and/or sections, but are not limited thereto. These terms are used only to distinguish one portion, component, region, layer, or section from another portion, component, region, layer, or section. Thus, a first portion, component, region, layer, or section described below may be referred to as a second portion, component, region, layer, or section within the scope of the present invention.

The technical terminology used herein is merely for referring to particular embodiments and is not intended to limit the present invention. Singular forms as used herein include plural forms as well, unless the context clearly indicates otherwise. The term "comprising" as used in the specification specifies the presence of a stated feature, region, integer, step, operation, element, and/or component, but does not preclude the presence or addition of one or more other features, regions, integers, steps, operations, elements, and/or components.

When a portion is referred to as being "on" or "above" another portion, it may be directly on or above the other portion, or there may be another portion interposed therebetween. In contrast, when a portion is referred to as being "directly on" another portion, there are no intervening portions therebetween.

Unless otherwise defined, all terms used herein, including technical and scientific terms, have the same meaning as would be understood by one of ordinary skill in the art to which the present invention pertains. Terms generally defined in commonly used dictionaries are to be interpreted as having meanings consistent with their meaning in the context of the relevant art and the present disclosure, and are not to be interpreted in an idealized or overly formal sense unless expressly so defined herein.

Hereinafter, embodiments of the present invention will be described in detail. However, these embodiments are presented by way of example only, and are not intended to limit the present invention, which is defined solely by the scope of the claims described below.

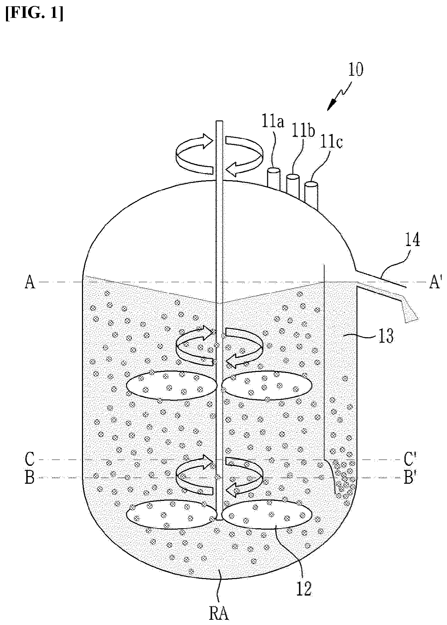

FIG. 1 illustrates a manufacturing apparatus 10 for a positive electrode active material precursor for a lithium secondary battery according to one embodiment of the present invention.

Referring to FIG. 1, the manufacturing apparatus 10 for a positive electrode active material precursor for a lithium secondary battery according to one embodiment of the present invention comprises: a reactor (RA) into which reaction raw materials are introduced to produce a reaction product; an agitator 12 for agitating the reaction raw materials; a solid-liquid separation member 13 disposed between a sidewall of the reactor (RA) and the agitator 12 to perform solid-liquid separation of the reaction product; and a filtrate outlet 14 disposed above the solid-liquid separation member 13 to separate and discharge the filtrate to the outside of the reactor (RA).

The reaction raw materials refer to substances for manufacturing a positive electrode active material precursor, and may include, for example, a metal salt solution, a pH control agent, and a chelating agent. The metal salt solution may be an aqueous raw material containing a transition metal for a positive electrode active material of a lithium secondary battery, and may include a metal salt such as a sulfate, nitrate, or acetate. Specifically, and without limitation, the metal salt solution may be an aqueous sulfate solution containing cobalt, nickel, or manganese.

The pH control agent may be, without limitation, any one selected from NaOH, KOH, and mixtures thereof. The chelating agent may be, without limitation, any one selected from an aqueous ammonia solution, an aqueous ammonium sulfate solution, and mixtures thereof.

The metal salt solution, the pH control agent, and the chelating agent as the reaction raw materials may be introduced into the reactor (RA) through inlets comprising a first inlet 11a, a second inlet 11b, and a third inlet 11c, respectively. In one embodiment, at least one of the first inlet 11a, the second inlet 11b, and the third inlet 11c may be shared so that an inert gas is introduced to allow the reaction to proceed. The inert gas may be, without limitation, nitrogen gas, argon gas, or a mixture thereof.

In the reactor (RA), the metal salt solution and the pH control agent are introduced and consumed through reaction in the reactor to produce primary particles. The chelating agent may cause the primary particles to aggregate to form secondary particles. The reactor (RA) may be controlled so that the reactants are uniformly distributed within the reactor (RA).

The agitator 12 disposed in the reactor (RA) may agitate the reaction raw materials. Specifically, the agitator 12 is a member that generates a flow of fluid and increases the mixing degree of the reaction materials. The agitated reaction raw materials are mixed with each other, reacted, and consumed to produce precursor particles and a reaction filtrate, and exist in a homogeneous phase within the reactor (RA). Specifically, the introduced reaction raw materials, such as the metal salt and the pH control agent, may react with each other and be consumed in the reactor. For example, a metal salt such as a metal sulfate and a pH control agent such as sodium hydroxide may be mixed and react with each other to form a metal hydroxide and sodium sulfate.

In one embodiment, the reactor (RA) may include at least one baffle (not shown) that induces vortex flow therein. Specifically, the baffle may act as an obstruction plate to the fluid flow in the reactor (RA) to form a vortex, thereby promoting mixing of the reactants and assisting in uniform distribution of the secondary precursor particles in the reactants.

In one embodiment, the reactor (RA) may include a start volume region (between the bottom surface of the RA and line BB') and a reaction volume region (between the bottom surface of the RA and line AA'). The start volume region refers to a volume in which the flow effects of the fluid during the reaction can be manifested, and is the region where the raw materials, after being charged into the reactor (RA), begin to react due to vortices induced by a member such as the agitator 12. The reaction volume region refers to the region in which the reaction proceeds from the start volume region, the amount of reaction product increases, and the reaction product is discharged. In this region, the raw materials undergo a volume change as the reaction proceeds, and the change in internal flow within the reactor (RA) affects the growth of the precursor. The higher the ratio of the reaction volume region, the greater the production of the precursor.

In one embodiment, the reaction volume region may account for 70% to 90% of the internal volume of the reactor, and more specifically, may account for 80% to 90% of the internal volume. Securing such a reaction volume region provides the advantage of significantly increasing the precursor production amount per reaction.

The solid-liquid separation member 13 is a member disposed between the sidewall of the reactor (RA) and the agitator 12 for separating solids and liquids from the reaction product. Specifically, the solid-liquid separation member 13 may be disposed along the circumferential direction of the sidewall of the reactor (RA). The solids and liquids separated through the solid-liquid separation member 13 may be, respectively, precursor particles and filtrate from the reaction product obtained through a co-precipitation reaction.

In one embodiment, the solid-liquid separation member 13 may be arranged in place of the above-described baffles. For example, in a conventional apparatus, four baffles may be arranged to face each other, whereas in the present invention, at least one of the baffles may be replaced with a solid-liquid separation member 13.

The solid-liquid separation member 13, being disposed inside the reactor (RA), can suppress the flow of the reaction products generated from the raw materials, allow continuous solid-liquid separation during the co-precipitation reaction, and thereby significantly improve the productivity of the reaction products such as the precursor per batch. Specifically, the solid-liquid separation member 13 suppresses fluid flow inside the structure to induce solid-liquid separation, while outside the structure, it acts as a vortex generator for the fluid flow generated by the agitator 12 to assist in homogenization. More specifically, after abundant particle nuclei are generated in the start volume region of the reactor (RA) at the initial stage of the reaction, solid-liquid separation proceeds within the solid-liquid separation member 13 upon reaching the reaction volume region, and the liquid phase filtrate can be discharged.

By disposing the solid-liquid separation member 13 in the reactor (RA), the reaction products generated in the reactor (RA) during the reaction can be solid-liquid separated in real time within the solid-liquid separation member 13, and the separated reaction filtrate can be removed, thereby securing additional reaction volume. This process can be repeated in real time, increasing the solid-liquid ratio of the total particles generated in the reactor (RA). Specifically, by additionally arranging the solid-liquid separation member 13 in the reactor (RA), it is possible to increase the productivity of reaction products such as the positive electrode active material precursor due to the secured additional reaction volume, improve the sphericity of the positive electrode active material precursor, and ensure crystallographic orientation of the positive electrode active material precursor. Consequently, after converting the positive electrode active material precursor into a positive electrode active material, an oriented crystalline phase can be formed, enabling the production of high-performance positive electrode active materials.

The filtrate outlet 14 for separating and discharging the filtrate to the outside of the reactor (RA) may be disposed above the solid-liquid separation member 13. The filtrate outlet 14 is positioned above the solid-liquid separation member 13 so as to discharge the liquid-phase filtrate, excluding the solid precursor particles, from the reaction product separated in the solid-liquid separation member 13. Specifically, within the solid-liquid separation member 13, the flow of the reaction product generated inside the reactor (RA) is suppressed, such that the heavier solid precursor particles in the reaction product move downward toward the lower portion of the solid-liquid separation member 13, while the relatively lighter reaction filtrate is concentrated toward the upper portion of the solid-liquid separation member 13.

In this case, the filtrate is removed in real time through the filtrate outlet 14 and discharged to the outside. As a result, a corresponding volume within the reactor is secured as reaction volume, inducing continuous growth of the precursor particles and ultimately allowing a significant increase in precursor yield per reaction. Specifically, after the desired precursor particles are formed and the effective reaction volume is reached, the amount of volume generated by the input of raw materials can overflow the solid-liquid separation member 13 and be discharged through the filtrate outlet 14.

In one embodiment, the filtrate outlet 14 may be inclined downward as it extends away from the reactor (RA). By disposing the filtrate outlet 14 at a predetermined inclination angle, the remaining filtrate can be more easily discharged to the outside. In one embodiment, the filtrate outlet 14 may satisfy a range of 0° to 90°, specifically 15° to 90°, and more specifically 45° to 90°, relative to a direction perpendicular to the extension of the reactor (RA) sidewall. Satisfying this range enables smooth discharge of the filtrate.

In one embodiment, the filtrate outlet 14 may be connected to a filtrate reservoir (not shown) for storing the filtrate. The filtrate stored in the reservoir can be recycled, thereby providing a manufacturing apparatus for a positive electrode active material precursor for a lithium secondary battery with improved economic efficiency.

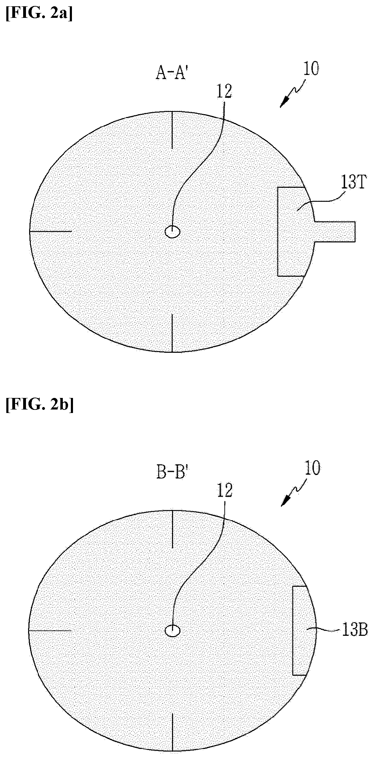

FIGS. 2a to 2c are front views taken along lines AA', BB', and CC' of FIG. 1, respectively.

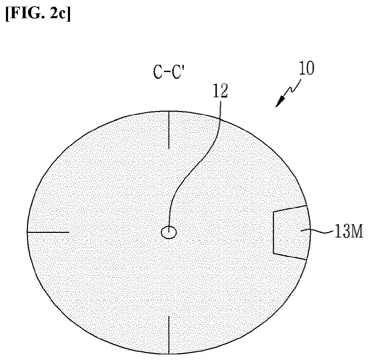

Referring to FIGS. 2a to 2c, FIG. 2a is a front view taken along line AA' of FIG. 1, specifically showing the structure including an upper portion 13T of the solid-liquid separation member and the filtrate outlet 14. FIG. 2b is a front view taken along line BB' of FIG. 1, specifically showing a lower portion 13B of the solid-liquid separation member. FIG. 2c is a front view taken along line CC' of FIG. 1, specifically showing a middle portion 13M of the solid-liquid separation member.

The solid-liquid separation member 13 includes an upper portion 13T, a middle portion 13M, and a lower portion 13B, wherein the cross-sectional area of the lower portion 13B may gradually decrease from top to bottom. The solid-liquid separation member 13 serves to prevent the internal flow phenomena of the reaction product generated by the agitator 12 from being transferred into the interior of the solid-liquid separation member. By gradually decreasing the cross-sectional area of the lower portion 13B from top to bottom, the influence of the flow generated by the agitator 12 can be effectively suppressed. Specifically, the gradual reduction in the cross-sectional area of the lower portion 13B can generate a slight negative pressure at the lower portion 13B, which draws the precursor settled inside the solid-liquid separation member 13 back into the reactor (RA) to induce further reaction, thereby improving the productivity of the synthesized precursor.

In one embodiment, the internal volume of the solid-liquid separation member 13 may be 25% or less of the reaction volume region, and more specifically, may be 20% or less of the total reaction volume region. The above ratio of the internal volume of the solid-liquid separation member 13 is calculated based on the reaction design for a reaction time (RT) of 5 to 20 hours. For example, at 1 RT of 5 hours, the internal volume of the solid-liquid separation member 13 may be 15% to 25%, and at 1 RT of 10 hours, the internal volume may be 5% to 15%. As such, in a co-precipitation reaction, as the reaction time (RT) decreases, productivity increases, and when the reaction time is set to 1 RT of 5 hours, the internal volume of the solid-liquid separation member may be at or below 20% of the total reactor volume.

By satisfying the above range for the internal volume of the solid-liquid separation member 13, the proportion of the reaction volume region can be efficiently increased to maximize the yield of the positive electrode active material precursor. If the internal volume of the solid-liquid separation member 13 deviates from the above range, the effect of increasing the proportion of the reaction volume region may be insignificant, and the ability to block the transfer of the internal flow phenomena of the formed reaction product into the interior of the solid-liquid separation member may be impaired.

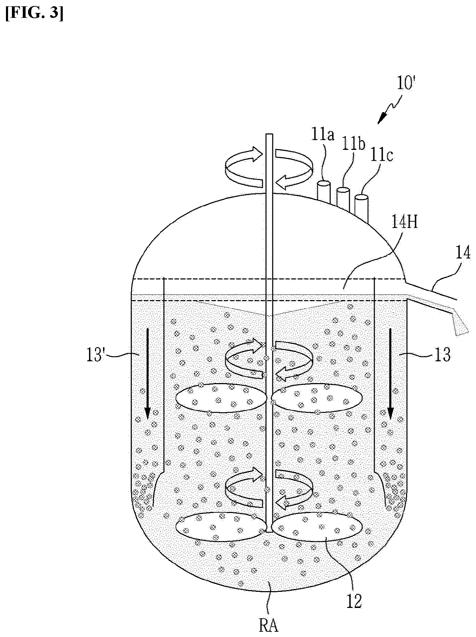

FIG. 3 illustrates a manufacturing apparatus for a positive electrode active material precursor for a lithium secondary battery according to another embodiment of the present invention.

Referring to FIG. 3, in one embodiment, the solid-liquid separation member 13 may comprise a plurality of members. By including a plurality of solid-liquid separation members 13, the ratio of the reaction volume region can be increased, thereby improving the productivity of the precursor particles.

In one embodiment, the plurality of solid-liquid separation members 13 may be disposed to face each other. The plurality of solid-liquid separation members 13 may be arranged in pairs facing each other. For example, the plurality of solid-liquid separation members 13 may be disposed in four regions, facing each other in place of baffles. By arranging the plurality of solid-liquid separation members 13 in pairs facing each other, it is possible to secure a stable reaction region, enhance solid-liquid separation efficiency in real time, and easily secure additional reaction volume, thereby increasing precursor productivity.

In one embodiment, when a plurality of solid-liquid separation members 13 are provided, the apparatus may further comprise a filtrate discharge assisting member 14H. Specifically, the filtrate discharge assisting member 14H may be disposed above the solid-liquid separation members 13 and connected to the filtrate outlet 14. More specifically, the filtrate discharge assisting member 14H is a component connected to the filtrate outlet 14 that facilitates the movement of the filtrate provided from the plurality of solid-liquid separation members 13 toward the filtrate outlet 14.

In one embodiment, the filtrate discharge assisting member 14H may be horizontally connected to the upper ends of the solid-liquid separation members 13 to function as piping. Specifically, the filtrate discharge assisting member 14H is piping for delivering the filtrate, which has been solid-liquid separated from the upper ends of the plurality of solid-liquid separation members 13, to the filtrate outlet 14. In one embodiment, the filtrate discharge assisting member 14H may have a sealed structure except for the portion in contact with the upper ends of the solid-liquid separation members 13. Specifically, the filtrate discharge assisting member 14H may be formed with a sealed structure in regions other than the upper ends of the solid-liquid separation members 13, so that the reaction product is not introduced by fluid flow.

In one embodiment, the filtrate discharge assisting member 14H may have a circular or polygonal pipe shape. It may have a donut shape along the outer wall of the reactor, be connected to each of the solid-liquid separation members 13 and the filtrate outlet 14, and have a sealed structure in other regions. Specifically, an edge portion of the filtrate discharge assisting member 14H may correspond to the upper portion 13T of the solid-liquid separation member 13. By including the filtrate discharge assisting member 14H, the piping function for filtrate discharge can be realized without the need to additionally install a component requiring separate power, thereby providing an economic advantage.

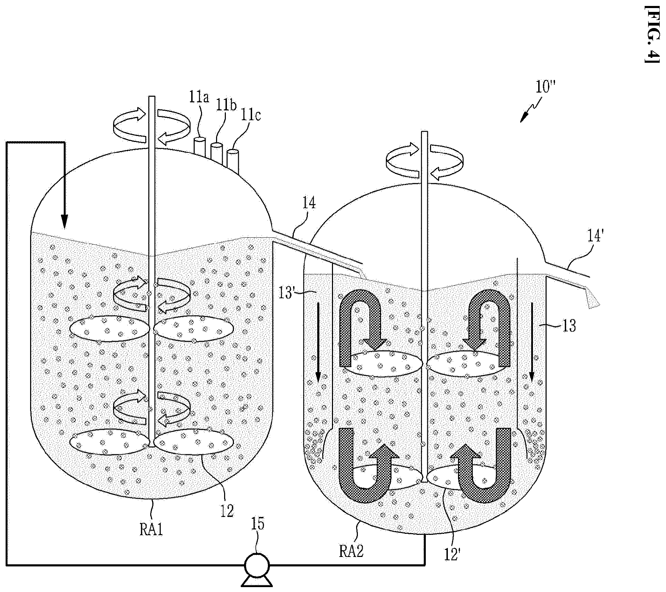

FIG. 4 illustrates a manufacturing apparatus 10" for a positive electrode active material precursor for a lithium secondary battery according to another embodiment of the present invention.

Referring to FIG. 4, the manufacturing apparatus 10" for a positive electrode active material precursor for a lithium secondary battery may include a plurality of reactors. In one embodiment, the manufacturing apparatus 10", which includes a first reactor (RA1) and a second reactor (RA2), may comprise a conventional batch-type co-precipitation reactor without a solid-liquid separation member as the first reactor (RA1), and a second reactor (RA2) including at least one solid-liquid separation member 13 and a filtrate outlet 14'.

The reaction product supplied from the first reactor (RA1) through an outlet 14 may be introduced into the second reactor (RA2), where a solid-liquid separation member 13 is disposed between the sidewall of the second reactor (RA2) and an agitator 12' to perform solid-liquid separation of the reaction product. A filtrate outlet 14' is disposed above the solid-liquid separation member 13 to separate and discharge the filtrate to the outside of the second reactor (RA2).

In one embodiment, the first reactor (RA1) may include a first agitator 12 for agitating the reaction raw materials introduced therein and an outlet 14 for transferring the reaction product generated from the reaction raw materials to the second reactor (RA2). The second reactor (RA2) may include a second agitator 12' for agitating the reaction product introduced from the first reactor (RA1), the solid-liquid separation member 13 disposed between the sidewall of the second reactor (RA2) and the second agitator 12', and the outlet 14 disposed above the solid-liquid separation member 13 to separate and discharge the filtrate to the outside of the second reactor (RA2). Detailed descriptions of each component can be referenced from the description of the corresponding components of the manufacturing apparatus 10 for a positive electrode active material precursor for a lithium secondary battery described above, to the extent that they are not inconsistent herewith.

Specifically, the manufacturing apparatus 10" for a positive electrode active material precursor for a lithium secondary battery is a device including two reactors, in which a primary reaction is performed in the first reactor (RA1), followed by an additional reaction including solid-liquid separation in the second reactor (RA2). By additionally performing a reaction including solid-liquid separation in the second reactor (RA2), the solid content can be increased.

In one embodiment, the first reactor (RA1) may be positioned at a higher elevation than the second reactor (RA2). Positioning the first reactor (RA1) above the second reactor (RA2) allows the reaction product generated in the first reactor (RA1) to be transferred more easily to the second reactor (RA2).

In one embodiment, the manufacturing apparatus 10" for a positive electrode active material precursor for a lithium secondary battery may maintain, after the mid-point of the reaction, an equal volume of raw materials introduced into the reactor and reaction filtrate discharged from the reactor. Specifically, when the reaction volumes of both the first reactor (RA1) and the second reactor (RA2) have been reached, the total volume of reaction filtrate discharged from the solid-liquid separation member 13 and the outlet 14 may be equal to the total volume of raw materials introduced into the first reactor (RA1). In this manner, the manufacturing apparatus 10" can maintain the reaction continuously for the desired reaction time while increasing the solid-liquid ratio, without being constrained by a limited reaction volume.

In one embodiment, a recovery member 15 may be provided, connecting from the second reactor (RA2) toward the first reactor (RA1), for recovering the concentrated reaction product having an increased solid-liquid ratio. Specifically, the main reaction section in which the reaction raw materials form or grow particles through co-precipitation is the first reactor (RA1), and the recovery member 15 circulates the reaction product, which has an increased solid-liquid ratio due to solid-liquid separation in the second reactor (RA2), back to the first reactor (RA1) to induce further particle growth reactions.

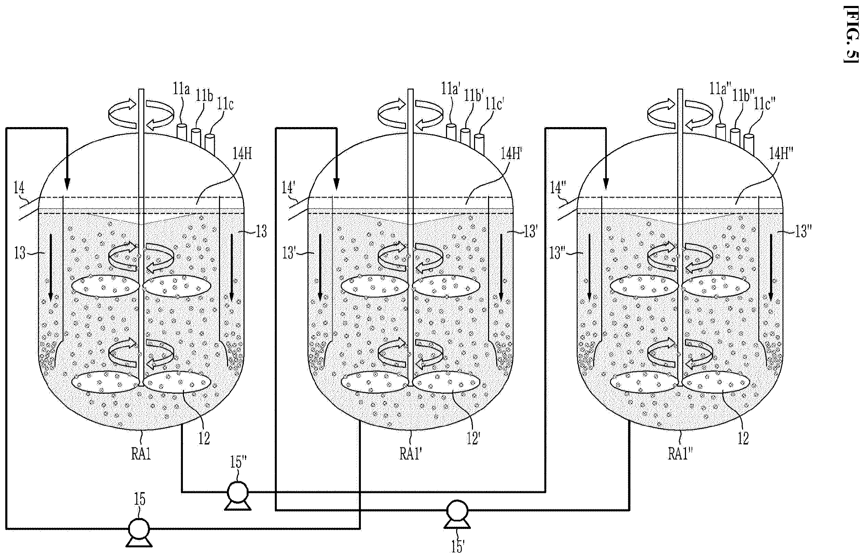

FIG. 5 illustrates a manufacturing apparatus 10‴ for a positive electrode active material precursor for a lithium secondary battery according to another embodiment of the present invention.

Referring to FIG. 5, the manufacturing apparatus 10‴ for a positive electrode active material precursor for a lithium secondary battery may include a plurality of second reactors (RA2), as described above, connected in parallel. In one embodiment, the manufacturing apparatus 10‴ may include: a reactor (RA), for example, the second reactor (RA2) described above, into which reaction raw materials are introduced to produce a reaction product; an agitator 12 for agitating the reaction raw materials; a solid-liquid separation member 13 disposed between the sidewall of the reactor (RA) and the agitator 12 to perform solid-liquid separation of the reaction product; and a filtrate outlet 14 disposed above the solid-liquid separation member 13 to separate and discharge the filtrate to the outside of the reactor (RA). In one embodiment, the manufacturing apparatus 10‴ may further include a filtrate discharge assisting member 14H. The detailed configuration of the reactor is the same as described with respect to FIGS. 1 to 4, to the extent that it is not inconsistent therewith.

In one embodiment, a plurality of second reactors (RA2) may be connected in parallel along the same line, and each second reactor (RA2) may circulate the reaction product having an increased solid-liquid ratio, obtained through solid-liquid separation, via recovery members 15, 15', and 15", to induce further particle growth reactions. In this case, filtrate outlets 14, 14', and 14", disposed above the solid-liquid separation members 13, 13', and 13", respectively, may independently discharge the reaction filtrate to the outside. By arranging multiple second reactors (RA2) in parallel in this way, the reaction products in the multiple reactors can be homogenized through cross-flow among the reactors, thereby improving productivity.

In one embodiment, the manufacturing apparatus 10‴ for a positive electrode active material precursor for a lithium secondary battery may further include a first reactor (RA1) positioned at a higher elevation than the plurality of second reactors (RA2). The detailed description of the first reactor (RA1) is the same as described with respect to FIG. 4, to the extent that it is not inconsistent therewith.

According to another embodiment of the present invention, a method for manufacturing a positive electrode active material precursor for a lithium secondary battery may include: introducing reaction raw materials comprising a mixed metal salt solution and an alkaline solution into a reactor and agitating the same with an agitator to produce a reaction product comprising precursor particles; performing solid-liquid separation of the reaction product by disposing a solid-liquid separation member between the reactor and the agitator during production of the reaction product; and, after performing the solid-liquid separation, discharging remaining filtrate.

In the step of producing the reaction product comprising precursor particles by introducing the reaction raw materials, including the metal salt solution and the alkaline solution, into the reactor and agitating the same with the agitator, the reaction raw materials may include substances such as the metal salt solution, the alkaline solution, and a chelating agent as described above. These reaction raw materials are introduced into the reactor and agitated with the agitator to produce a reaction product containing precursor particles. The details of the reaction raw materials, reactor, agitator, and reaction product may be the same as those described for the apparatus for manufacturing a positive electrode active material precursor for a lithium secondary battery, to the extent that they are not inconsistent herewith.

In the step of performing solid-liquid separation of the reaction product during production, by means of the solid-liquid separation member disposed between the reactor and the agitator, the precursor particles and filtrate in the reaction product can be separated.

In one embodiment, in the step of performing solid-liquid separation of the reaction product during production, the solid-liquid separation may be performed by a plurality of solid-liquid separation members. The plurality of solid-liquid separation members may be arranged in the reactor. By disposing multiple solid-liquid separation members, the ratio of the reaction volume can be increased, thereby improving precursor productivity. The operational principle of the solid-liquid separation members may be as described above for the solid-liquid separation member, to the extent that it is not inconsistent herewith.

In the step of discharging remaining filtrate after performing the solid-liquid separation, the filtrate may be discharged by suppressing the flow of the reaction product generated in the reactor within the solid-liquid separation member, such that the heavier solid precursor particles in the reaction product move downward toward the lower portion of the solid-liquid separation member, while the relatively lighter reaction filtrate is concentrated toward the upper portion of the solid-liquid separation member.

In this case, the filtrate can be removed in real time through the filtrate outlet and discharged to the outside, thereby securing a corresponding volume within the reactor as reaction volume, inducing continuous growth of the precursor particles, and ultimately significantly increasing precursor yield per reaction. Specifically, after the effective reaction volume is reached with the desired precursor particles formed, the volume fraction generated by the input of raw materials may overflow the solid-liquid separation member and be discharged through the filtrate outlet. The details of this process may be the same as those described above for the filtrate outlet, to the extent that they are not inconsistent herewith.

In one embodiment, prior to the step of performing solid-liquid separation of the reaction product during production, the method may further comprise producing a reaction product from the reaction raw materials in an additional reactor. The additional reactor corresponds to the first reactor (RA1) described above in the apparatus for manufacturing a positive electrode active material precursor for a lithium secondary battery, and details of the first reactor (RA1) may be referenced to the extent that they are not inconsistent herewith. By including the step of producing the reaction product in the additional reactor, the reaction product can be produced in the additional reactor, and subsequently, solid-liquid separation can be performed in the reactor, thereby increasing the solid-liquid ratio and improving precursor productivity.

In one embodiment, the step of performing solid-liquid separation of the reaction product during production may further comprise performing the step in parallel in a plurality of reactors. By arranging multiple reactors including the solid-liquid separation step and conducting the reaction in parallel in the plurality of reactors, the productivity of the synthesized precursor can be improved.

The following examples are provided merely to illustrate one embodiment of the present invention, and the present invention is not limited thereto.

### <Experimental Example>

### <Cathode Materialization According to Precursor Particle Growth>

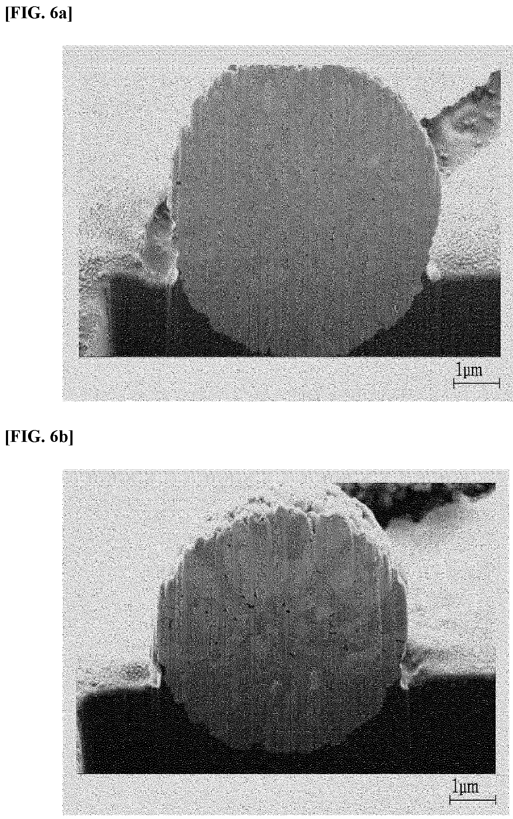

FIGS. 6a to 6c show cross-sectional particle images of cathode materials obtained by materializing the precursors produced according to the embodiments and comparative examples of the present invention.

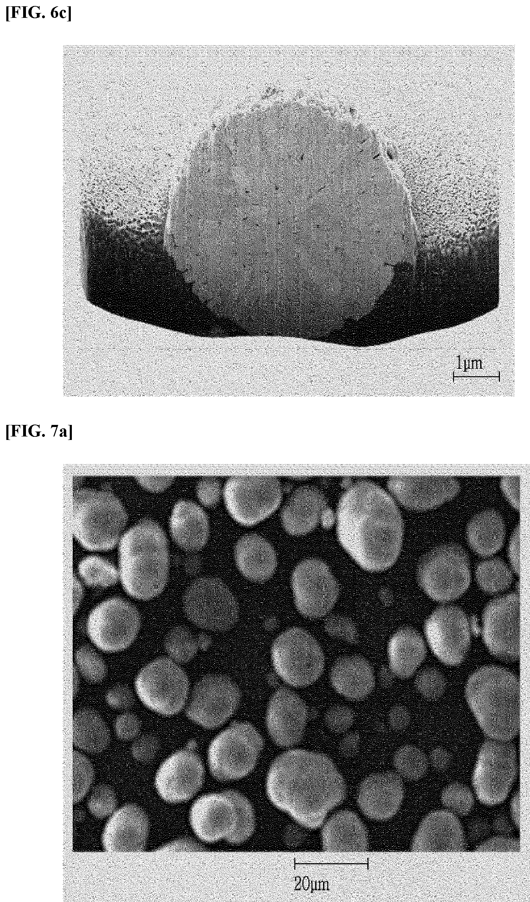

Referring to FIGS. 6a to 6c, FIG. 6a corresponds to a comparative example of the present invention using a conventional general batch-type apparatus, FIG. 6b corresponds to one embodiment of the present invention using a circulation process, and FIG. 6c corresponds to another embodiment of the present invention using a circulation concentration process. Each figure shows cross-sectional SEM images of the cathode materials obtained from the respective precursors.

From the product morphology and cross-section in FIG. 6a, it can be seen that the sphericity and crystallographic orientation are relatively inferior compared to those in FIGS. 6b and 6c. In contrast, in the case of the products in FIGS. 6b and 6c, it can be confirmed that cathode active materials of high performance, having excellent sphericity and crystallographic orientation, can be manufactured.

### <Precursor Synthesis Results>

Table 1 below shows the results of precursor synthesis according to the configurations of the embodiments and comparative examples of the present invention. The comparative example in Table 1 corresponds to the conventional technology using a manufacturing apparatus for a positive electrode active material precursor without a solid-liquid separation member or a filtrate outlet. Example 1 corresponds to a manufacturing apparatus for a positive electrode active material precursor for a lithium secondary battery including both a solid-liquid separation member and a filtrate outlet. Example 2 corresponds to a manufacturing apparatus for a positive electrode active material precursor for a lithium secondary battery comprising a first reactor without a solid-liquid separation member and a filtrate outlet, and a second reactor including both a solid-liquid separation member and a filtrate outlet.

**[Table 1]**

| | Comparative Example | Example 1 | Example 2 |
|---|---|---|---|
| Reaction Residence Time (hr/RT) | 20 | 10 | 10 |
| Total Reaction Time (hr/batch) | 20 | 30 | 30 |
| Precursor Yield (kg/batch) | 10 | 30 | 60 |
| Monthly Yield (kg/month) | 280 | 593 | 1,186 |

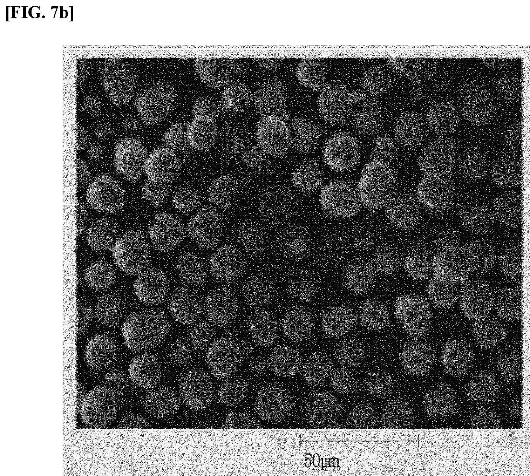

FIGS. 7a and 7b show photographs of the precursor synthesis results according to the embodiments and comparative examples of the present invention. FIG. 7a shows the precursor synthesis result photograph of the comparative example, and FIG. 7b shows the precursor synthesis result photograph of Example 2. Referring to Table 1 together with FIGS. 7a and 7b, it can be confirmed that physical properties such as particle size distribution, fine particle state, and sphericity of the product are improved.

The present invention is not limited to the above-described embodiments and may be manufactured in various different forms. It will be understood by those skilled in the art that various changes in form and details may be made without departing from the spirit or essential characteristics of the present invention. Therefore, the embodiments described above should be understood as illustrative in every respect and not as restrictive.

## Claims

1. A manufacturing apparatus for a positive electrode active material precursor for a lithium secondary battery, comprising:
a reactor into which reaction raw materials are introduced to produce a reaction product;
an agitator for agitating the reaction raw materials;
a solid-liquid separation member disposed between a sidewall of the reactor and the agitator to perform solid-liquid separation of the reaction product; and
a filtrate outlet disposed above the solid-liquid separation member to separate and discharge the filtrate to the outside of the reactor.

2. The manufacturing apparatus for a positive electrode active material precursor for a lithium secondary battery of claim 1, wherein the solid-liquid separation member comprises a lower portion, a middle portion, and an upper portion, and a cross-sectional area of the lower portion gradually decreases from top to bottom.

3. The manufacturing apparatus for a positive electrode active material precursor for a lithium secondary battery of claim 1, wherein the solid-liquid separation member comprises a plurality of members.

4. The manufacturing apparatus for a positive electrode active material precursor for a lithium secondary battery of claim 3, wherein the plurality of solid-liquid separation members are disposed to face each other.

5. The manufacturing apparatus for a positive electrode active material precursor for a lithium secondary battery of claim 1, further comprising a filtrate discharge assisting member for guiding the filtrate provided from the plurality of solid-liquid separation members to move toward the filtrate outlet.

6. The manufacturing apparatus for a positive electrode active material precursor for a lithium secondary battery of claim 1, wherein the reactor comprises a plurality of reactors connected in parallel.

7. The manufacturing apparatus for a positive electrode active material precursor for a lithium secondary battery of claim 1, wherein the filtrate outlet is disposed to be inclined downward as it extends away from the reactor.

8. A manufacturing apparatus for a positive electrode active material precursor for a lithium secondary battery comprising a plurality of reactors including a first reactor and a second reactor,
wherein the first reactor includes a first agitator for agitating reaction raw materials introduced therein and an outlet for discharging a portion of a reaction product of the reaction raw materials;
the second reactor includes a second agitator for agitating a reaction product introduced from the first reactor, a solid-liquid separation member disposed between a sidewall of the first reactor and the second agitator to perform solid-liquid separation of the reaction product, and a filtrate outlet disposed above the solid-liquid separation member to separate and discharge the filtrate to the outside of the reactor; and
the second reactor is disposed on a side of the first reactor and at a lower position than the first reactor.

9. The manufacturing apparatus for a positive electrode active material precursor for a lithium secondary battery of claim 8, further comprising a recovery member connected from the second reactor toward the first reactor to recover a portion of the filtrate.

10. The manufacturing apparatus for a positive electrode active material precursor for a lithium secondary battery of claim 8, wherein the second reactor comprises a plurality of reactors connected in parallel.

11. The manufacturing apparatus for a positive electrode active material precursor for a lithium secondary battery of claim 8, wherein the solid-liquid separation member comprises a lower portion, a middle portion, and an upper portion, and a cross-sectional area of the lower portion gradually decreases from top to bottom.

12. The manufacturing apparatus for a positive electrode active material precursor for a lithium secondary battery of claim 11, wherein the solid-liquid separation member comprises a plurality of members.

13. The manufacturing apparatus for a positive electrode active material precursor for a lithium secondary battery of claim 12, further comprising a filtrate discharge assisting member for guiding the filtrate provided from the plurality of solid-liquid separation members to move toward the filtrate outlet.

14. The manufacturing apparatus for a positive electrode active material precursor for a lithium secondary battery of claim 11, wherein the solid-liquid separation member comprises a start volume region and a reaction volume region, and the reaction volume region accounts for 70% to 90% of an internal volume of the reactor.

15. The manufacturing apparatus for a positive electrode active material precursor for a lithium secondary battery of claim 11, wherein an internal volume of the solid-liquid separation member is 20% or less of a total reaction volume region.

16. A method for manufacturing a positive electrode active material precursor for a lithium secondary battery, comprising:
introducing reaction raw materials comprising a mixed metal salt solution and an alkaline solution into a reactor and agitating the same with an agitator to produce a reaction product comprising precursor particles;
performing solid-liquid separation of the reaction product by disposing a solid-liquid separation member between the reactor and the agitator during production of the reaction product; and
discharging remaining filtrate during the solid-liquid separation step.

17. The method for manufacturing a positive electrode active material precursor for a lithium secondary battery of claim 16, wherein in the step of performing solid-liquid separation of the reaction product, the solid-liquid separation is performed by a plurality of solid-liquid separation members.

18. The method for manufacturing a positive electrode active material precursor for a lithium secondary battery of claim 16, further comprising, prior to the step of performing solid-liquid separation of the reaction product, producing a reaction product of the reaction raw materials in an additional reactor.

19. The method for manufacturing a positive electrode active material for a lithium secondary battery of claim 18, wherein the step of performing solid-liquid separation of the reaction product by disposing a solid-liquid separation member between the reactor and the agitator during production of the reaction product further comprises performing the step in parallel in a plurality of reactors.
